# EUROPÄISCHE PATENTANMELDUNG

(11) **EP 4 015 106 A1**
(43) Veröffentlichungstag der Anmeldung: **22.06.2022**
(21) Anmeldenummer: 20215593.3
(22) Anmeldetag: 18.12.2020
(51) Int. Cl.: B22F 3/11, B22F 5/00, B22F 10/20, B22F 10/366, B22F 10/38, B29C 64/153, B29C 64/386, B33Y 10/00, B33Y 50/00, B33Y 50/02, B33Y 80/00, G05B 19/4097, G05B 19/4099, F01D 5/00, B22F 5/04

(54) **ADDITIV HERGESTELLTE PORÖSE BAUTEILSTRUKTUR UND MITTEL ZU DEREN HERSTELLUNG**

(71) Anmelder: Siemens Energy Global GmbH & Co. KG, 81739 München (DE); Siemens Aktiengesellschaft, 80333 München (DE)
(72) Erfinder: Albert, Johannes, 13357 Berlin (DE); Bogner, Jan Pascal, 13357 Berlin (DE); Geisen, Ole, 14057 Berlin (DE); Hajduk, Michael, 12059 Berlin (DE); Heitmann, Timo, 10245 Berlin (DE); Kiener, Christoph, 81369 München (DE)

(57) **Zusammenfassung**

Es wird ein Verfahren zum Bereitstellen von CAM-Herstellungsanweisungen für die additive, pulverbettbasierte Herstellung eines Bauteils (10) angegeben. Dabei wird eine Geometrie des Bauteils (10), umfassend einen Vollmaterialbereich (B), einen Übergangsbereich (T) und einen porösen Bauteilbereich (12, T), anhand von CAD-Daten definiert, wobei Bestrahlungsparameter für die Herstellung des Bauteils, umfassend eine Bestrahlungsleistung (P), eine Rastergeschwindigkeit (v), einen Rasterabstand (d) und eine Schichtdicke (t), innerhalb des Übergangsbereichs (T) derart variiert, dass ein Porositätsgradient der Struktur des Bauteils (10) zwischen dem Vollmaterialbereich (B) des Bauteils (10) und dem porösen Bauteilbereich (H) ausgebildet wird. Weiterhin werden ein entsprechendes Verfahren zum Herstellen des Bauteils und ein Computerprogrammprodukt, sowie eine additiv hergestellte Bauteilstruktur angegeben.

## Beschreibung

Die vorliegende Erfindung betrifft ein Verfahren zum Bereitstellen von Herstellungsanweisungen für die additive, pulverbettbasierte Herstellung eines kühlbaren Bauteils oder Bauteilbereichs, umfassend einen Vollmaterialbereich, einen Übergangsbereich und einen porösen Bereich. Weiterhin werden ein entsprechender additiv hergestellten Bauteilbereich und Mittel zu deren Herstellung sowie ein Computerprogrammprodukt angegeben.

Das Bauteil ist vorzugsweise für den Einsatz im Heißgaspfad einer Gasturbine, wie einer stationären Gasturbine, vorgesehen. Besonders bevorzugt betrifft die Bauteilstruktur eine Komponente einer Brennkammer bzw. ein Resonatorbauteil wie einen Helmholtz-Resonator oder einen Teil davon. Vorzugsweise ist das Bauteil eine zu kühlende Komponente, beispielsweise kühlbar über eine Fluidkühlung. Dazu weist das Bauteil vorzugsweise eine maßgeschneiderte Durchlässigkeit oder Permeabilität für ein entsprechendes Kühlfluid, beispielsweise Kühlluft, auf.

Alternativ kann es sich bei dem Bauteil um ein anderes kühlbares oder teilweise poröses Bauteil handeln, beispielsweise eines, das für den Einsatz in der Automobilität oder im Luftfahrtsektor Anwendung findet.

Moderne Gasturbinenbauteile oder vergleichbare Komponenten sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen, Kriechbelastung und thermomechanischer Ermüdung, verbessert.

Die generative oder additive Fertigung wird aufgrund ihres für die Industrie disruptiven Potenzials zunehmend interessant auch für die Serienherstellung der oben genannten Turbinenkomponenten, wie beispielsweise Turbinenschaufeln oder Brennerkomponenten.

Additive Herstellungsverfahren (umgangssprachlich auch als "3D-Druck" bezeichnet) umfassen beispielsweise als Pulverbettverfahren das selektive Laserschmelzen (SLM) oder Lasersintern (SLS), oder das Elektronenstrahlschmelzen (EBM). Weitere additive Verfahren sind beispielsweise "Directed Energy Deposition (DED)"-Verfahren, insbesondere Laserauftragsschweißen, Elektronenstrahl-, oder Plasma-Pulverschweißen, Drahtschweißen, metallischer Pulverspritzguss, sogenannte "sheet lamination"-Verfahren, oder thermische Spritzverfahren (VPS LPPS, GDCS).

Ein Verfahren zum additiven Aufbau eines Bauteils mit einer porösen Stützstruktur ist beispielsweise bekannt aus EP 3 278 908 B1. Die Strukturporosität, welche - im Gegensatz zur vorliegenden Erfindung - hier die Stützstruktur betrifft, ist demnach jedoch nicht zur Kühlung vorgesehen.

Ein Dichtegradient von additiv aufgebautem Material ist weiterhin allgemein in WO 2020/018604 A1 beschrieben.

Weiterhin beschreibt das Dokument WO 2014/2023521 ein Verfahren zur Herstellung eines dreidimensionalen Bauteils mittels selektivem Laserschmelzen, wobei entsprechende Parameter zur Konfektionierung der Mikrostruktur und/oder einer Porosität des Bauteils angepasst werden können.

Additive Fertigungsverfahren (englisch: "additive manufacturing") haben sich weiterhin als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei (Computer-Aided-Design) und der Wahl entsprechender Fertigungsparameter erfolgen kann.

Eine CAD-Datei oder ein Computerprogrammprodukt, kann beispielsweise als (flüchtiges oder nicht-flüchtiges) Speichermedium, wie z.B. eine Speicherkarte, ein USB-Stick, eine CD-ROM oder DVD, oder auch in Form einer herunterladbaren Datei von einem Server und/oder in einem Netzwerk bereitgestellt oder umfasst werden. Die Bereitstellung kann weiterhin zum Beispiel in einem drahtlosen Kommunikationsnetzwerk durch die Übertragung einer entsprechenden Datei mit dem Computerprogrammprodukt erfolgen.

Ein Computerprogrammprodukt kann Programmcode, Maschinencode bzw. numerische Steuerungsanweisungen, CAM-(Computer-Aided-Manufacturing) Steuerungsanweisungen, G-code und/oder andere ausführbare Programmanweisungen im Allgemeinen beinhalten.

Das Computerprogrammprodukt kann weiterhin Geometriedaten oder Konstruktionsdaten in einem dreidimensionalen Format bzw. als CAD-Daten enthalten bzw. ein Programm oder Programmcode zum Bereitstellen dieser Daten umfassen.

Die Herstellung von Gasturbinenschaufeln mittels der beschriebenen pulverbettbasierten Verfahren (LPBF englisch für "Laser Powder Bed Fusion") ermöglicht vorteilhaft die Implementierung von neuen Geometrien, Konzepten, Lösungen und/oder Design, welche die Herstellungskosten bzw. die Aufbau- und Durchlaufzeit reduzieren, den Herstellungsprozess optimieren und beispielsweise eine thermo-mechanische Auslegung oder Strapazierfähigkeit der Komponenten deutlich verbessern können.

Auf konventionelle Art, beispielsweise gusstechnisch, hergestellte Schaufelkomponenten, stehen der additiven Fertigungsroute beispielsweise hinsichtlich ihrer Designfreiheit und auch in Bezug auf die erforderliche Durchlaufzeit und den damit verbundenen hohen Kosten sowie dem fertigungstechnischen Aufwand deutlich nach.

Mittels der genannten LPBF-Verfahren ist es bereits möglich, poröse Materialien herzustellen, welche für verschiedene Anwendungen, beispielsweise zur Kühlung oder zur mechanischen Dämpfung eingesetzt werden können.

Zum Teil werden solche Strukturen auch bereits in Vollmaterialkomponenten integriert. Dies führt zwangsläufig zu strukturell problematischen Übergängen zwischen porösen Bereichen und dichten bzw. undurchlässigen Vollmaterialbereichen der Bauteile. Die genannten Übergänge stellen bei Belastung der ganzen Komponente im Betrieb häufig eine Schwachstelle dar, was dazu führt, dass die Bauteile für ihren bestimmungsgemäßen Gebrauch gar nicht oder nicht lange oder verlässlich einsetzbar sind, da die mechanische Anbindung der porösen Bereiche und damit die Formstabilität des Bauteils insgesamt nicht sichergestellt werden kann. Große Spannungsgradienten entstehen während der Herstellung und führen insbesondere dazu, dass die porösen Bereiche in dem Übergang bei Belastung "abreißen".

Es ist daher eine Aufgabe der vorliegenden Erfindung, Mittel anzugeben, mit welchen die Anbindung der genannten porösen Strukturbereiche bei additiv herzustellenden Bauteilen zuverlässig gewährleistet werden kann. Dadurch können die genannten porösen Materialbereiche überhaupt erst verlässlich funktionell im entsprechenden Bauteil eingesetzt werden, was die Strukturintegrität von additiven Kühlstrukturen beispielsweise entscheidend verbessert.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum Bereitstellen von CAM-Herstellungsanweisungen für die additive, pulverbettbasierte Herstellung eines Bauteils, wobei eine Geometrie des Bauteils, umfassend einen Vollmaterialbereich, einen Übergangsbereich und einen porösen Bauteilbereich, anhand von CAD-Daten definiert wird, wobei Bestrahlungsparameter für die Herstellung des Bauteils, umfassend unter anderem eine Bestrahlungsleistung, eine Rastergeschwindigkeit, einen Raster- oder Schraffurabstand und eine Schichtdicke, innerhalb des Übergangsbereichs und während der Herstellung des Bauteils (schichtweise) derart variiert werden, dass ein Porositätsgradient der Struktur des Bauteils zwischen dem Vollmaterialbereich des Bauteils und dem porösen Bauteilbereich ausgebildet wird.

Vorteilhafterweise kann durch die vorliegende Erfindung so bereits prozessvorbereitend, also der eigentlichen Herstellung des Bauteils vorgeschaltet, eine CAM-Strategie bereitgestellt werden, welche dann bei deren Ausführung im Aufbauprozess unweigerlich zu vorteilhaften Struktureigenschaften in dem Übergangsbereich führt. Mit anderen Worten wird durch die genannten Mittel der Übergangsbereich strukturell deutlich robuster ausgestaltet, sodass dieser auch deutlich größeren Kraftflüssen und Belastungen des Bauteils im Betrieb standhält.

In einer Ausgestaltung wird mindestens ein Bestrahlungsparameter aus den genannten derart gewählt, dass die Struktur des Bauteils in dem porösen Bauteilbereich zwischen 5 % und 40 % beträgt, vorzugsweise ungefähr 20 %. Die Dimensionierung der Porosität gemäß dieser Ausgestaltung ist besonders zweckmäßig für fluidgekühlte und demgemäß durchströmbare Bauteilstrukturen.

In einer Ausgestaltung wird mindestens ein Bestrahlungsparameter derart gewählt, dass die Struktur des Bauteils in dem Übergangsbereich eine graduell variierende Porosität zwischen ungefähr 0 in dem Vollmaterialbereich bis hin zu einem Porositätswert des porösen Bauteilbereichs, von vorzugsweise ungefähr 20 %, aufweist. Eine gradierte oder (graduell) variierende Porosität erlaubt mit Vorteil besonders effizient die strukturelle Verstärkung des Übergangsbereichs. Insbesondere erlaubt diese Ausgestaltung vorteilhaft das Unterdrücken von Rissen oder Risszentren während des Aufbaus und damit, einen mechanisch besonders robusten Übergangsbereich herzustellen.

In einer Ausgestaltung wird mindestens ein Bestrahlungsparameter derart gewählt, dass die Porosität kontinuierlich bzw. stufenlos (fließend) graduell variierend ausgebildet wird. Diese Ausgestaltung zeichnet sich durch die gleichen Vorteile, betreffend die mechanische Festigkeit, wie die zuletzt genannte Ausgestaltung aus.

In einer Ausgestaltung wird mindestens ein Bestrahlungsparameter aus den oben genannten derart gewählt, dass die Porosität stufenweise (graduell) variierend ausgebildet wird. Durch diese Ausgestaltung kann immer noch ein hinreichender struktureller oder mechanischer Zusammenhalt zwischen dem Vollmaterialbereich und dem porösen Bauteilbereich hergestellt werden, wobei jedoch die prozedurale Umsetzung der Bauteilherstellung hinsichtlich der Prozessvorbereitung vereinfacht werden kann.

In einer Ausgestaltung wird eine Bestrahlungsleistung, insbesondere Laserleistung, in dem Übergangsbereich von dem Vollmaterialbereich bis hin zu dem porösen Bauteilbereich, sei es graduell gestuft oder stufenlos, reduziert. Dieser Parameter beeinflusst besonders wirksam die Porositätseigenschaften der aufgebauten Struktur.

In einer Ausgestaltung wird eine Rastergeschwindigkeit in dem Übergangsbereich von dem Vollmaterialbereich bis hin zu dem porösen Bauteilbereich, sei es graduell gestuft oder stufenlos, erhöht. Dieser Parameter beeinflusst ebenfalls besonders wirksam die Porositätseigenschaften der aufgebauten Struktur.

In einer Ausgestaltung wird ein Rasterabstand oder Schraffurabstand (englisch "hatching") in dem Übergangsbereich von dem Vollmaterialbereich bis hin zu dem porösen Bauteilbereich, sei es graduell gestuft oder stufenlos, erhöht. Dieser Parameter beeinflusst ebenfalls besonders wirksam die Porositätseigenschaften der aufgebauten Struktur.

In einer Ausgestaltung werden zwei oder mehr der genannten Parameter in dem Übergangsbereich, graduell gestuft oder stufenlos, und simultan variiert, um die entsprechenden vorteilhaften Porositätseigenschaften bereitzustellen.

Ein weiterer Aspekt der vorliegenden Erfindung betrifft ein Verfahren zur additiven Herstellung des Bauteils mittels selektivem Laserschmelzen, selektivem Lasersintern und/oder Elektronenstrahlschmelzen mit den wie oben beschrieben bereitgestellten CAM-Herstellungsanweisungen, wobei das Bauteil in dem Übergangsbereich (zwischen dem Vollmaterialbereich und dem porösen Bauteilbereich) entsprechend mit gradierten Porositätseigenschaften (Porositätsgradient) versehen wird.

Ein weiterer Aspekt der vorliegenden Erfindung betrifft ein Computerprogramm bzw. Computerprogrammprodukt, umfassend Befehle, die bei der Ausführung eines entsprechenden Programms durch einen Computer, beispielsweise zur Steuerung der Bestrahlung oder Belichtung in einer additiven Herstellungsanlage, diesen veranlassen, die Herstellungsanweisungen wie oben beschrieben umzusetzen bzw. das Bauteil entsprechend herzustellen.

Ein weiterer Aspekt der vorliegenden Erfindung betrifft eine additiv hergestellte Bauteilstruktur, welche einen Vollmaterialbereich, einen Übergangsbereich und einen porösen Bauteilbereich umfasst, wobei der porösen Bauteilbereich ein Kühlkörper ist, welcher eingerichtet ist, zur Kühlung der Struktur im Betrieb von einem Kühlfluid durchströmt zu werden, und wobei der Übergangsbereich (ebenfalls) eine poröse Struktur aufweist, durch welche sich gitterartige Vollmaterialelemente oder Stützelemente erstrecken, die vorzugsweise mit entsprechenden Prozessparametern für das Vollmaterial hergestellt werden. Dieser Aspekt der Erfindung erlaubt vorteilhafterweise auf eine alternative Art die Verstärkung des strukturellen Zusammenhalts zwischen dem Vollmaterialbereich und dem porösen Bereich. Insbesondere erlauben es, die beschriebenen Vollmaterialelemente, eine vorteilhaft vergrößerte Anbindungsfläche zwischen dem Vollmaterial und dem porösen Material bereitzustellen. Dadurch kann die strukturelle Anbindung des porösen Bereichs weiterhin verbessert werden.

In einer Ausgestaltung durchziehen die Vollmaterialelemente die poröse Struktur zumindest teilweise formschlüssig oder erstrecken sich durch diese. Der genannte Formschluss ermöglicht vorteilhafterweise eine noch weitere Erhöhung der strukturellen Anbindung, zusätzlich zu der genannten Vergrößerung der Anbindungsfläche.

In einer Ausgestaltung erstrecken sich die Vollmaterialelemente in dem Übergangsbereich über eine Länge von mindestens 0,1 mm bis hin zu 0,5 mm, 1 mm oder 10 mm, vorzugsweise 0,2 mm, bzw. überlappen entsprechend mit der porösen Struktur.

In einer Ausgestaltung ist die Bauteilstruktur Teil eines Bauteils, welches weiterhin eine zu kühlende Komponente des Heißgaspfades einer Strömungsmaschine ist, wie einer stationären Gasturbine, eine Turbinenschaufel, eine Hitzeschildkomponente einer Brennkammer, ein Resonatorbauteil und/oder ein Akustikdämpfer, oder eine Akkustikdämpfungsverbrennungskomponente.

Ein weiterer Aspekt der vorliegenden Erfindung betrifft ein Verfahren zur additiven Herstellung der zuletzt genannten Bauteilstruktur mittels selektivem Laserschmelzen oder Elektronenstrahlschmelzen, wobei zunächst die porösen Struktur aufgebaut wird und Bereiche für die Vollmaterialelemente anschließend aufgebaut werden. Beispielsweise kann dazu die poröse Struktur in dem porösen Bauteilbereich erneut mit anderen Bestrahlungsparametern bestrahlt werden, welche eine Vollmaterialverfestigung ermöglichen.

Dadurch kann die mechanische Anbindung weiterhin signifikant verbessert werden.

Ausgestaltungen, Merkmale und/oder Vorteile, die sich vorliegend auf das Verfahren zum Bereitstellen von Herstellungsanweisungen bzw. die Herstellungsverfahren beziehen, können ferner die additiv hergestellte Bauteilstruktur direkt betreffen, und umgekehrt.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Weitere Einzelheiten der Erfindung werden nachfolgend anhand der Figuren beschrieben.
Figur 1 zeigt eine schematische Schnittansicht eines pulverbettbasierten additiven Herstellungsprozesses.
Figur 2 deutet gemäß der vorliegenden Erfindung eine additiv hergestellte Struktur mit einem kontinuierlichen Porositätsgradienten an.
Figur 3 zeigt eine schematische Aufsicht auf ein Schraffur-Bestrahlungsmuster, gemäß dem eine Struktur erfindungsgemäß additiv hergestellt werden kann.
Figur 4 deutet gemäß der vorliegenden Erfindung eine additiv hergestellte Struktur mit einem stufenweisen Porositätsgradienten an.
Figur 5 deutet eine additiv hergestellte Struktur mit einem porösen Bereich und Vollmaterialelementen gemäß einer alternativen Ausgestaltung der vorliegenden Erfindung an.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

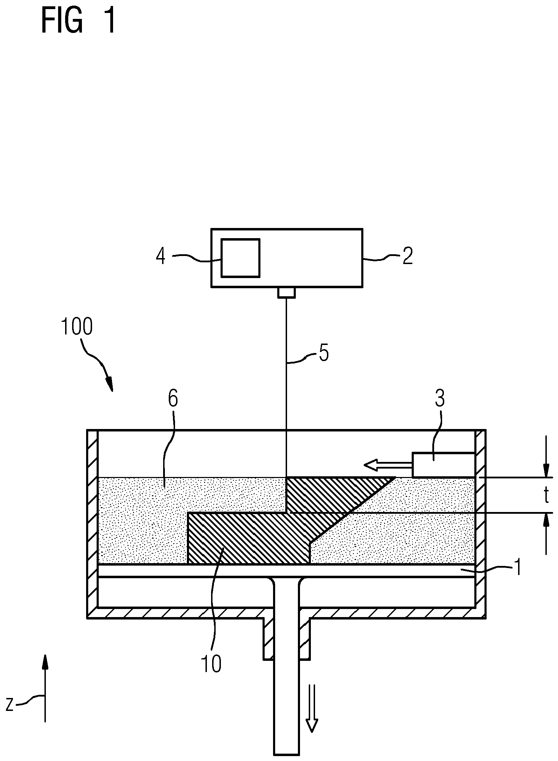

Figur 1 zeigt eine additive Herstellungsanlage 100. Die Herstellungsanlage 100 ist vorzugsweise als LPBF-Anlage und für den additiven Aufbau von Bauteilen oder Komponenten aus einem Pulverbett ausgestaltet. Die Anlage 100 kann auch eine Anlage zum Elektronenstrahlschmelzen betreffen. Demgemäß weist die Anlage eine Bauplattform 101 auf. Auf der Bauplattform 101 wird ein additiv herzustellendes Bauteil 20 schichtweise aus einem Pulverbett hergestellt. Letzteres wird durch ein Pulver 6 gebildet, welches durch eine Beschichtungseinrichtung 3 schichtweise auf der Bauplattform 1 verteilt werden kann. Nach dem Auftragen einer jeden Pulverschicht (vgl. Schichtdicke t) werden gemäß der vorgegebenen Geometrie des Bauteils 20 selektiv Bereiche der Schicht mit einem Energiestrahl, beispielsweise einem Laser oder Elektronenstrahl, von einer Bestrahlungseinrichtung 2 aufgeschmolzen und anschließend verfestigt.

Nach jeder Schicht wird die Bauplattform 1 vorzugsweise um ein der Schichtdicke t entsprechendes Maß abgesenkt (vergleiche nach unten gerichtetem Pfeil in Figur 1). Die Dicke t beträgt üblicherweise lediglich zwischen 20 und 40 µm, so dass der gesamte Prozess ohne weiteres die Bestrahlung von Tausenden bis hin zu mehreren 10.000 Schichten erfordern kann.

Dabei können durch den lediglich sehr lokal wirkenden Energieeintrag hohe Temperaturgradienten, von beispielsweise 10⁶ K/s oder mehr auftreten. Dementsprechend groß ist selbstverständlich während des Aufbaus und danach üblicherweise auch ein Verspannungszustand des Bauteils, was die additiven Herstellungsprozessen im Allgemeinen erheblich verkompliziert.

Die Geometrie des Bauteils wird üblicherweise durch eine CAD Datei ("Computer-Aided-Design") festgelegt. Nach dem Einlesen einer solchen Datei in die Herstellungsanlage 100 oder eine entsprechende Steuerungseinheit erfordert der Prozess anschließend zunächst die Festlegung einer geeigneten Bestrahlungsstrategie beispielsweise durch Mittel des CAM ("Computer-Aided-Manufacturing"), wodurch ebenfalls üblicherweise auch ein Aufteilen der Bauteilgeometrie in die einzelnen Schichten ("slicing") erfolgt.

Das Bauteil 10 ist vorzugsweise eine kühlbare und im Betrieb zu kühlende Komponente des Heißgaspfades einer Strömungsmaschine, wie eine Turbinenschaufel, eine Hitzeschildkomponente einer Brennkammer und/oder eine Resonator- oder Dämpferkomponente, beispielsweise ein Helmholtz-Resonator. Alternativ kann es sich bei dem Bauteil 10 um ein Ringsegment, ein Brennerteil oder eine Brennerspitze, eine Zarge, eine Schirmung, ein Hitzeschild, eine Düse, eine Dichtung, einen Filter, eine Mündung oder Lanze, einen Stempel oder einen Wirbler handeln, oder ein entsprechendes Nachrüstteil.

Die vorliegende Erfindung betrifft ein Verfahren zum Bereitstellen von CAM-Herstellungsanweisungen (CAM-Verfahren) für die additive Herstellung eines Bauteils 10, wie es anhand von Figur 1 beschrieben wurde.

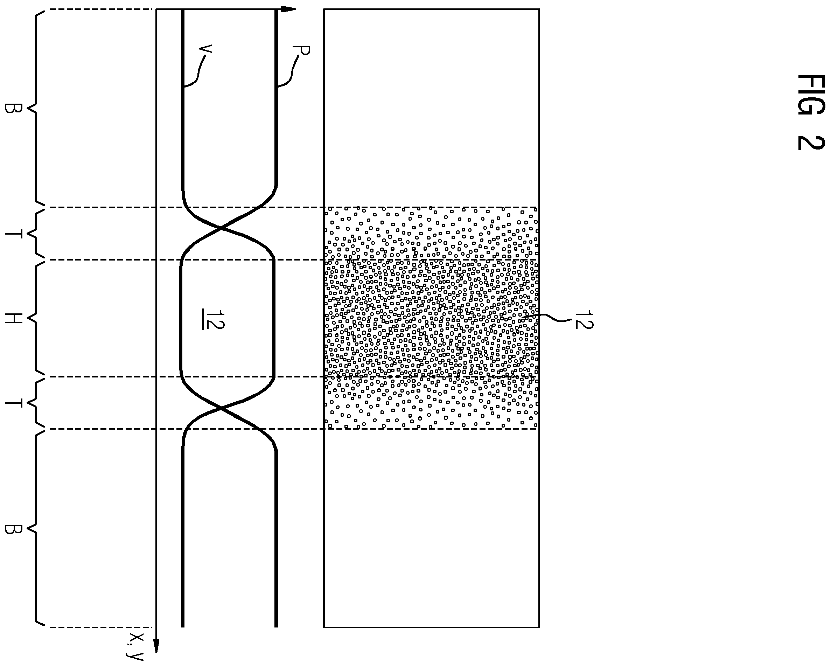

Die Geometrie des Bauteils 10 ist teilweise in Figur 2 dargestellt und wird üblicherweise anhand von CAD-Daten definiert. Die Geometrie des Bauteils, auf dessen Herstellung die genannten Herstellungsanweisungen abzielen, umfasst einen Vollmaterialbereich B, einen Übergangsbereich T und einen porösen Bauteilbereich T (vgl. Figuren 2 bis 5 weiter unten).

Im Rahmen des genannten CAM-Verfahrens werden nun weiterhin Bestrahlungsparameter für die Herstellung des Bauteils, mindestens umfassend eine Bestrahlungsleistung P, eine Rastergeschwindigkeit v, einen Rasterabstand d und eine Schichtdicke t, innerhalb des Übergangsbereichs T derart variiert, dass ein Porositätsgradient der Struktur des Bauteils 10 zwischen dem Vollmaterialbereich B des Bauteils 10 und dem porösen Bauteilbereich H ausgebildet wird. Der poröse Bauteilbereich H ist vorzugsweise als Kühlbereich oder Kühlstruktur vorgesehen und demgemäß eingerichtet, im Betrieb des Bauteils von einem Kühlfluid, zur Kühlung durchströmt zu werden.

Insbesondere zeigt die Figur 2, im oberen Teil eine entsprechend gradierte Bauteilstruktur bzw. eine gradierte Porosität des Bauteils. Im unteren Teil der Darstellung ist entsprechend der Position von links nach rechts eine Bestrahlungsleistung P, beispielsweise Laserleistung, sowie eine Rastergeschwindigkeit v qualitativ (kann in Prozent eines Norm- oder Standardwertes angegeben sein) über einer Raumrichtung x, y (vgl. laterale Ausdehnung des Pulverbettes) und/oder der Aufbaurichtung z aufgetragen (letzteres nicht explizit in den Figuren gekennzeichnet).

Es ist zu erkennen, dass die Laserleistung, welche im linken Bereich des Bauteils zur Verfestigung einer Vollmaterialstruktur relativ hoch gewählt wird. In dem sich rechts an den Vollmaterialbereich B anschließenden Übergangsbereich T fällt die Bestrahlungsleistung P auf ein deutlich schwächeres Maß herab, um dann im rechts folgenden porösen Materialbereich H einen konstant niedrigen Wert anzunehmen. Eine - beispielsweise im Vergleich zu Standardparametern - reduzierte Laserleistung erlaubt mit Vorteil die Reduktion der Materialdichte und damit die Kontrolle einer (maßgeschneiderten) Porosität 12 in dem porösen Bereich H des Bauteils 10.

Einem Fachmann ist natürlich bewusst, dass die Wahl von bestimmten Parameterwerten und deren Einfluss auf die Porosität des entsprechend herzustellenden Bauteils weiterhin abhängig von der Art des pulverförmigen Materials sind.

In der Mitte des porösen Bereichs H verläuft die Bestrahlungsleistung P, als auch die Rastergeschwindigkeit v spiegelsymmetrisch, da sich an den porösen Bereich H (siehe weiter rechts in der Figur 2) wieder ein Übergangsbereich T sowie ein entsprechender Bauteilbereich B anschließt.

Genau gegenläufig zu dem Effekt der Bestrahlungsleistung, bewirkt eine - beispielsweise im Vergleich zu Standardparametern - reduzierte Rastergeschwindigkeit v ebenfalls eine vergrößerte Porosität aufgrund eines räumlich oder zeitlich reduzierten Energieeintrages, der entsprechend nicht mehr zu der Verfestigung des pulverförmigen Ausgangsmaterials beiträgt. Ausgehend von einer verhältnismäßig geringen Rastergeschwindigkeit in dem links gezeigten Bauteilbereich B wird diese in dem linken Übergangsbereich T daher bis auf einen (konstanten) maximalen Wert in dem porösen Bauteilbereich H erhöht.

Im Wege des beschriebenen selektiven Laserschmelz-, Lasersinter- oder Elektronenstrahl-Schmelzprozesses wird das Bauteil erfindungsgemäß also vorteilhafterweise in dem Übergangsbereich T mit einem Porositätsgradienten versehen.

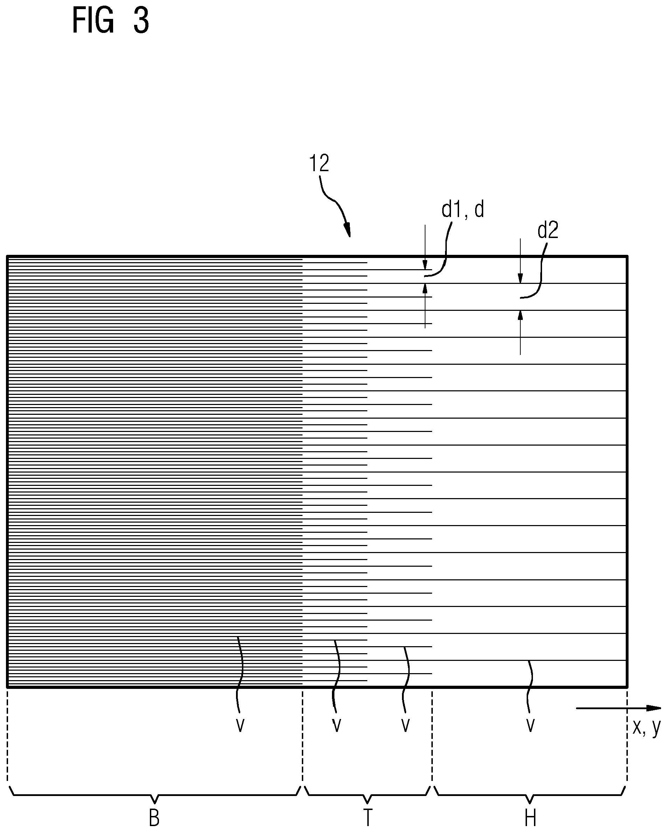

Wo dies nicht explizit gekennzeichnet ist können weitere Parameter alternativ oder zusätzlich variiert werden, um eine konfektionierte, vorzugsweise graduell variierende Porosität in den Übergangsbereichen zu generieren. Insbesondere kann weiterhin ein Rasterabstand variiert werden (vgl. Figur 3 weiter unten). Zudem kann beispielsweise die Schichtdicke T variiert werden; dies allerdings praktisch nutzbar lediglich in Vielfachen der "Vollmaterial-Schichtdicke" t und entlang der Aufbaurichtung z.

Figur 3 zeigt eine schematische Aufsicht auf ein Schraffur-Bestrahlungsmuster ("hatching"), bei dem ebenfalls in einem den Aufbauprozess vorbereitenden Schritt, ein Rasterabstand d von Bestrahlungsvektoren (von links nach rechts im Bild) derart variiert wird, dass ein Dichte- oder Porositätsgradient von dem Vollmaterialbereich B über den Übergangsbereich T bis hin zu dem porösen Bereich H eingestellt wird. Dies ist entlang oder mit Bezug auf jeder lateralen Richtung (x/y-Richtung) des Pulverbettes möglich. Um insbesondere eine größere Porosität herzustellen wird der Rasterabstand d, d1, d2, in mehreren Schritten oder stufenweise erhöht. Dies gelingt bei gleichbleibender Schmelzspurbreite (konstanten restlichen Bestrahlungsparametern) unmittelbar. Im rechten Teil der Darstellung ist beispielhaft ein Rasterabstand d2 gezeigt, welcher dem doppelten Maß von dem Rasterabstand d1 (siehe Bereich T) entspricht.

Erfindungsgemäß können ein oder mehrere der genannten Bestrahlungsparameter P, v, d, t derart gewählt werden, dass die Struktur 12 des Bauteils 10 in dem porösen Bauteilbereich H zwischen 5 % und 40 % beträgt, vorzugsweise ungefähr 20 %.

Weiterhin können ein oder mehrere der Bestrahlungsparameter derart gewählt werden, dass die Struktur 12 des Bauteils 10 in dem Übergangsbereich T eine graduell variierende Porosität zwischen ungefähr 0 in dem Vollmaterialbereich B bis hin zu einem Porositätswert des porösen Bauteilbereichs H, von vorzugsweise ungefähr 20 %, aufweist.

Weiterhin können ein oder mehrere der Bestrahlungsparameter derart gewählt werden, dass die Porosität kontinuierlich bzw. stufenlos variierend (fließend) ausgebildet wird. Dies soll durch die Situation, wie sie in der Figur 2 gezeigt ist, dargestellt werden.

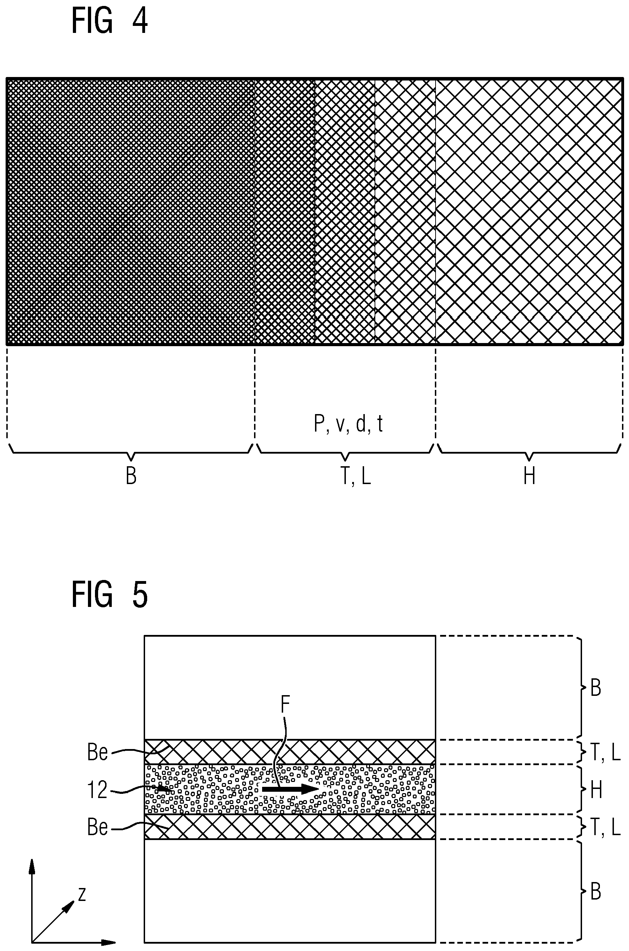

Weiterhin können ein oder mehrere der Bestrahlungsparameter derart gewählt werden, dass die Porosität stufenweise (graduell) ausgebildet wird. Diese Ausgestaltung entspricht der Situation aus Figur 4.

Figur 4 deutet insbesondere von links nach rechts anhand der unterschiedlich schraffierten Bereiche einen gestuften Porositäts- bzw. Dichteverlauf der entsprechend hergestellten Struktur für das Bauteil 10 an. Innerhalb des Bereichs T sind graduelle Abstufungen zwischen dem Vollmaterialbereich B und dem porösen Bereich H gezeigt.

Figur 5 zeigt eine additiv hergestellte Bauteilstruktur 10 anhand einer alternativen Ausgestaltung der vorliegenden Erfindung. Bei der Struktur für das Bauteil kann es sich beispielsweise auch um eine Bauteilwandung handeln.

Die unterschiedlich orientierten Pfeile unten links in der Darstellung der Figur 5 sollen andeuten, dass das Bauteil vorliegend gemäß beliebiger Aufbaurichtungen aufgebaut werden kann und die gezeigte vertikale Ausrichtung des Bauteils nicht notwendigerweise der vom Prozess vorgegebenen Aufbaurichtung entsprechen muss.

Der mittlere Bereich stellt wieder den porösen Bauteilbereich H dar. Der Pfeil in der Mitte deutet eine mögliche Durchströmungsrichtung für ein Kühlfluid F an, gemäß der gezeigte Bauteilbereich im Betrieb des Bauteils gekühlt werden könnte (lediglich der Einfachheit halber in den bisherigen Figuren nicht dargestellt). Längs in der Mitte des porösen Bereichs (etwa auf Höhe des Pfeils F, verläuft vorliegend (beispielhaft) eine Symmetrielinie, bezüglich der der gezeigte Bereich symmetrisch ausgebildet ist.

Lediglich beispielhaft ist der Bauteilbereich weiterhin mit zwei symmetrischen und gleichartigen Übergangsbereichen T versehen. Erfindungsgemäß werden in den Übergangsbereichen T gemäß dieser Ausgestaltung Volumen- oder Vollmaterialelemente Be vorgesehen, welche sich vorzugsweise gitter- oder strebenartig von den gezeigten Vollmaterialbereichen in Bereiche der porösen Struktur hinein erstrecken, oder diese durchziehen. Vorzugsweise durchziehen die Vollmaterialelemente Be die poröse Struktur 12 zumindest teilweise formschlüssig.

Im Gegensatz zu der weiter oben beschriebenen Ausgestaltung der additiv herzustellenden Bauteilstruktur wird hier eine verstärkte mechanische Anbindung der porösen Struktur an die Vollmaterialbereiche B nicht direkt durch eine Gradierung von porösen Material (graduelle Parametervariation) verwirklicht, sondern - wie beschrieben - durch die sich in die poröse Struktur hinein erstreckenden Vollmaterialelemente Be.

Die Vollmaterialelemente Be können sich beispielsweise in dem Übergangsbereich über eine Länge L von 0,1 mm bis 0,5 mm, oder mehr beispielsweise 1 mm, 2 mm, 3 mm, 4 mm, 5 mm oder 10 mm, vorzugsweise 0,2 mm, in die poröse Struktur hinein erstrecken, um eine möglichst feste mechanische Verankerung zu bewirken.

Gemäß der vorliegenden Erfindung wird während des pulverbettbasierten additiven Herstellungsprozesses (vgl. Figur 1 weiter oben) mittels selektivem Laserschmelzen oder Elektronenstrahlschmelzen, vorzugsweise zunächst die poröse Struktur 12 aufgebaut wird und Bereiche der Vollmaterialelemente Be anschließend aufgebaut. Wie oben angedeutet kann dies schichtweise (Schichtenfolge hier nicht explizit gekennzeichnet) gemäß jeder beliebigen Aufbaurichtung Z erfolgen.

Auch kann, ohne dass dies explizit in den Figuren gekennzeichnet ist, eine Gradierung der Porosität in den Übergangsbereichen entlang eines Rotationswinkels, verdreht, erfolgen.

Gemäß der zweiten erfindungsgemäßen Alternative zu der additiven Bauteilstruktur können sich auch die Vollmaterialelemente Be unterschiedlich weit, beispielsweise radial innen nur minimal, dafür aber radial weiter außen deutlich weiter in die poröse Struktur hinein erstrecken.

## Patentansprüche

1. Verfahren zum Bereitstellen von CAM-Herstellungsanweisungen für die additive, pulverbettbasierte Herstellung eines Bauteils (10), wobei eine Geometrie des Bauteils (10), umfassend einen Vollmaterialbereich (B), einen Übergangsbereich (T) und einen porösen Bauteilbereich (12, T), anhand von CAD-Daten definiert wird, wobei Bestrahlungsparameter für die Herstellung des Bauteils, umfassend eine Bestrahlungsleistung (P), eine Rastergeschwindigkeit (v), einen Rasterabstand (d) und eine Schichtdicke (t), innerhalb des Übergangsbereichs (T) derart variiert werden, dass ein Porositätsgradient der Struktur des Bauteils (10) zwischen dem Vollmaterialbereich (B) des Bauteils (10) und dem porösen Bauteilbereich (H) ausgebildet wird.

2. Verfahren gemäß Anspruch 1, wobei mindestens ein Bestrahlungsparameter (P, v, d, t) derart gewählt wird, dass die Struktur (12) des Bauteils (10) in dem porösen Bauteilbereich (H) zwischen 5 % und 40 % beträgt, vorzugsweise circa 20 %.

3. Verfahren gemäß Anspruch 1 oder 2, wobei mindestens ein Bestrahlungsparameter derart gewählt wird, dass die Struktur (12) des Bauteils (10) in dem Übergangsbereich (T) eine graduell variierende Porosität zwischen ungefähr 0 in dem Vollmaterialbereich (B) bis hin zu einem Porositätswert des porösen Bauteilbereichs (H), von vorzugsweise circa 20 %, aufweist.

4. Verfahren gemäß Anspruch 3, wobei mindestens ein Bestrahlungsparameter derart gewählt wird, dass die Porosität kontinuierlich bzw. stufenlos graduell variierend ausgebildet wird.

5. Verfahren gemäß Anspruch 3, wobei mindestens ein Bestrahlungsparameter derart gewählt wird, dass die Porosität stufenweise graduell variierend ausgebildet wird.

6. Verfahren gemäß einem der vorhergehenden Ansprüche, wobei eine Bestrahlungsleistung (P) in dem Übergangsbereich (T) von dem Vollmaterialbereich (B) bis hin zu dem porösen Bauteilbereich (H) reduziert wird.

7. Verfahren gemäß einem der vorhergehenden Ansprüche, wobei eine Rastergeschwindigkeit (v) in dem Übergangsbereich (T) von dem Vollmaterialbereich (B) bis hin zu dem porösen Bauteilbereich (H) erhöht wird.

8. Verfahren gemäß einem der vorhergehenden Ansprüche, wobei ein Rasterabstand (d) in dem Übergangsbereich (T) von dem Vollmaterialbereich (B) bis hin zu dem porösen Bauteilbereich (H) erhöht wird.

9. Verfahren zur additiven Herstellung eines Bauteils mittels selektivem Laserschmelzen oder Elektronenstrahlschmelzen mit den gemäß einem der vorherigen Ansprüche bereitgestellten Herstellungsanweisungen (CAM), wobei das Bauteil (10) in dem Übergangsbereich (T) zwischen dem Vollmaterialbereich (B) und einem porösen Bauteilbereich (H) mit einem Porositätsgradienten versehen wird.

10. Computerprogrammprodukt, umfassend Befehle, die bei der Ausführung eines entsprechenden Programms durch einen Computer, beispielsweise zur Steuerung der Bestrahlung in einer additiven Herstellungsanlage (100), diesen veranlassen, die Herstellungsanweisungen (CAM) gemäß einem der Ansprüche 1 bis 8 umzusetzen bzw. das Bauteil (10) gemäß Anspruch 9 herzustellen.

11. Additiv hergestellte Bauteilstruktur, welche einen Vollmaterialbereich (B), einen Übergangsbereich (T) und einen porösen Bauteilbereich (H) umfasst, wobei der poröse Bauteilbereich (H) ein Kühlkörper ist, welcher eingerichtet ist, zur Kühlung der Struktur im Betrieb von einem Kühlfluid (F) durchströmt zu werden, und wobei der Übergangsbereich (T) eine poröse Struktur (12) aufweist, durch welche sich gitterartige Vollmaterialelemente (Be) erstrecken.

12. Bauteilstruktur gemäß Anspruch 11, wobei die Vollmaterialelemente (Be) die poröse Struktur (12) zumindest teilweise formschlüssig durchziehen.

13. Bauteilstruktur gemäß Anspruch 11oder 12, wobei sich die Vollmaterialelemente (Be) in dem Übergangsbereich über eine Länge (L) von 0,1 mm bis 0,5 mm, vorzugsweise 0,2 mm, erstrecken.

14. Bauteil (10), umfassend eine Bauteilstruktur nach einem der Ansprüche 11 bis 13, wobei das Bauteil (10) eine zu kühlende Komponente des Heißgaspfades einer Strömungsmaschine ist, wie eine Turbinenschaufel, eine Hitzeschildkomponente einer Brennkammer, ein Resonatorbauteil und/oder ein Akkustikdämpfer.

15. Verfahren zur additiven Herstellung Bauteilstruktur nach einem der Ansprüche 11 bis 14 mittels selektivem Laserschmelzen oder Elektronenstrahlschmelzen, wobei zunächst die poröse Struktur (12) aufgebaut wird und Bereiche der Vollmaterialelemente (Be) anschließend aufgebaut werden.
